# EUROPEAN PATENT SPECIFICATION

(11) **EP 1 169 359 B1**
(45) Date of publication and mention of the grant of the patent: **22.06.2005**
(21) Application number: 00910262.5
(22) Date of filing: 22.02.2000
(51) Int. Cl.: C08F 8/04

(54) **HYDROGENATED BLOCK COPOLYMERS**
HYDROGENIERTE BLOCK-COPOLYMERE
COPOLYMERES SEQUENCES HYDROGENES

(30) Priority: 19.03.1999 US 125258 P; 11.06.1999 US 330520
(43) Date of publication of application: 09.01.2002
(73) Proprietor: THE DOW CHEMICAL COMPANY, Midland, Michigan 48674 (US); REGENTS OF THE UNIVERSITY OF MINNESOTA, Minneapolis, MN 55455 (US)
(72) Inventor: BATES, Frank, S., St. Louis Park, MN 55416 (US); CHU, Chin, Scotch Plains, NJ 07076 (US); FREDRICKSON, Glenn, H., Santa Barbara, CA 93108 (US); HAHN, Stephen, F., Midland, MI 48642 (US)
(74) Representative: Raynor, John
(86) International application number: PCT/US2000/004360
(87) International publication number: WO 2000/056783

(56) References cited:
- US-A- 4 400 478
- US-A- 4 882 384

## Description

The present invention relates to hydrogenated block copolymers. In particular, the invention relates to hydrogenated block copolymers prepared from vinyl aromatic and conjugated diene monomers. Among the most common are those prepared from a vinyl aromatic monomer, such as styrene and a conjugated diene, such as butadiene or isoprene. Depending on the composition and structure, the block copolymers can be in the form of highly extensible elastomers or tough, rigid thermoplastics. Such block copolymers have also been hydrogenated to further differentiate the range of physical properties and the oxidative stability. Hydrogenation of the polymerized conjugated diene block can be achieved alone or in combination with hydrogenation of the aromatic ring of the polymerized vinyl aromatic monomer. Depending on hydrogenation conditions and the catalyst employed, it is possible to hydrogenate the conjugated diene polymer portion of the block copolymer without substantially effecting the vinyl aromatic polymer block, or to substantially saturate both block types.

Fully hydrogenated block copolymers prepared from vinyl aromatic and conjugated diene monomers, wherein both blocks are substantially saturated, are well known in the art. US-A-3,333,024 and US-A-3,431,323 disclose hydrogenated triblock (ABA) copolymers of vinyl aromatic and conjugated diene polymers having a 20 to 30 percent hydrogenation level and improved tensile properties, when compared to their non-hydrogenated counterparts. However, such copolymers containing very low molecular weight hydrogenated polystyrene blocks, for example 4,000, have low heat resistance and do not afford rigid compositions with good physical properties. US-A-3,598,886 discloses hydrogenated vinyl substituted aromatic hydrocarbon-conjugated diene block copolymers having less than 3 percent aromatic unsatu ration, however low molecular weight polymers are exemplified, which do not offer good physical properties. Moreover, Thermoplastic Elastomers, Chapter 14, Ed. N.R. Legge, et al., Hanser Publishers, New York, 1987 discloses that fully hydrogenated block copolymers have generally poor physical properties at only slightly elevated temperatures.

Therefore, it remains desirable to obtain hydrogenated block copolymers prepared from vinyl aromatic and conjugated diene monomers with improved physical properties and retention of these properties at elevated temperatures.

In one aspect, the present invention is a hydrogenated pentablock copolymer prepared by hydrogenating a pentablock copolymer produced from at least one vinyl aromatic monomer and at least one conjugated diene monomer, wherein the hydrogenated pentablock copolymer has a total number average molecular weight (Mnₜ) of from 30,000 to 200,000 and is of the structure ABABA, and wherein each vinyl aromatic polymer block (A) has a Mnₐ of from 5,000 to 100,000 and is hydrogenated to greater than 90 percent and each conjugated diene polymer block (B) has a Mn_{b} of from 2,000 to 50,000 and is hydrogenated to greater than 95 percent.

The hydrogenated pentablock copolymers of the present invention having these Mn and hydrogenation characteristics, have superior properties and processability characteristics when compared to other block and pentablock copolymers. The hydrogenated copolymers of the present invention also exhibit higher resistance to yield, and improved impact strength. In addition, the pentablocks exhibit lower melt viscosity compared to the conventional hydrogenated diblock and triblock copolymers at identical molecular weights.

The hydrogenated pentablock copolymers of the present invention can be used in various applications including fabricated articles, thermoformed articles, injection molded articles, extruded articles, foams, and films.

The present invention relates to a hydrogenated pentablock copolymer prepared by hydrogenating a pentablock copolymer produced from at least one vinyl aromatic monomer and at least one conjugated diene monomer having the structure ABABA, wherein the A block is a hydrogenated polymerized vinyl aromatic monomer, herein referred to as hydrogenated vinyl aromatic polymer, and the B block is a hydrogenated polymerized conjugated diene monomer, herein referred to as a hydrogenated conjugated diene polymer.

The vinyl aromatic monomer is typically a monomer of the formula: 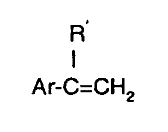 wherein R' is hydrogen or alkyl, Ar is phenyl, halophenyl, alkylphenyl, alkylhalophenyl, naphthyl, pyridinyl, or anthracenyl, wherein any alkyl group contains 1 to 6 carbon atoms which may be mono or multisubstituted with functional groups such as halo, nitro, amino, hydroxy, cyano, carbonyl and carboxyl. More preferably Ar is phenyl or alkyl phenyl with phenyl being most preferred. Typical vinyl aromatic monomers include styrene, alpha-methylstyrene, all isomers of vinyl toluene, especially paravinyltoluene, all isomers of ethyl styrene, propyl styrene, butyl styrene, vinyl biphenyl, vinyl naphthalene, vinyl anthracene, and mixtures thereof. The pentablock copolymer can contain more than one specific polymerized vinyl aromatic monomer. In other words, the pentablock copolymer can contain a polystyrene block and a poly-alpha-methylstyrene block. The hydrogenated vinyl aromatic polymer block may also be a copolymer of a vinyl aromatic wherein the vinyl aromatic portion is at least 50 weight percent of the copolymer.

The conjugated diene monomer can be any monomer having 2 conjugated double bonds. Such monomers include for example 1,3-butadiene, 2-methyl-1,3-butadiene, 2-methyl-1,3 pentadiene, isoprene and similar compounds, and mixtures thereof. The pentablock copolymer can contain more than one specific polymerized conjugated diene monomer. In other words, the pentablock copolymer can contain a polybutadiene block and a polyisoprene block.

The conjugated diene polymer block can be chosen from materials which remain amorphous after the hydrogenation process, or materials which are capable of crystallization after hydrogenation. Hydrogenated polyisoprene blocks remain amorphous, while hydrogenated polybutadiene blocks can be either amorphous or crystallizable depending upon their structure. Polybutadiene can contain either a 1,2 configuration, which hydrogenates to give the equivalent of a 1-butene repeat unit, or a 1,4-configuration, which hydrogenates to give the equivalent of an ethylene repeat unit. Polybutadiene blocks having at least approximately 40 weight percent 1,2-butadiene content, based on the weight of the polybutadiene block, provides substantially amorphous blocks with low glass transition temperatures upon hydrogenation. Polybutadiene blocks having less than approximately 40 weight percent 1,2-butadiene content, based on the weight of the polybutadiene block, provide crystalline blocks upon hydrogenation. Depending on the final application of the polymer it may be desirable to incorporate a crystalline block (to improve solvent resistance) or an amorphous, more compliant block. The conjugated diene polymer block may also be a copolymer of a conjugated diene, wherein the conjugated diene portion of the copolymer is at least 50 weight percent of the copolymer.

A block is herein defined as a polymeric segment of a copolymer which exhibits microphase separation from a structurally or compositionally different polymeric segment of the copolymer. Microphase separation occurs due to the incompatibility of the polymeric segments within the block copolymer. Microphase separation and block copolymers are widely discussed in "Block Copolymers-Designer Soft Materials", PHYSICS TODAY, February, 1999, pages 32-38.

The hydrogenated pentablock copolymer of the present invention typically contains from 10 to 90 weight percent of a hydrogenated vinyl aromatic polymer, for example, polyvinylcyclohexane or PVCH block, generally from 15, preferably from 20, more preferably from 25, and most preferably from 30 to 90 weight percent, preferably to 85 and most preferably to 80 percent, based on the total weight of the hydrogenated pentablock copolymer.

The hydrogenated pentablock copolymers of the present invention typically contain from 10 to 90 weight percent of a hydrogenated conjugated diene polymer block, preferably from 15, and more preferably from 20 to 90 weight percent, typically to 85, preferably to 80, more preferably to 75, even more preferably to 70 and most preferably to 65 percent, based on the total weight of the hydrogenated pentablock copolymer.

In applications where properties such as high modulus are important, the hydrogenated pentablock copolymer will contain at least 65 weight percent of a hydrogenated vinyl aromatic polymer block. In applications where an elastomer is preferred, the hydrogenated pentablock copolymer will contain at least 60 weight percent of a hydrogenated conjugated diene polymer block.

The total number average molecular weight (Mn) of the hydrogenated pentablock copolymers of the present invention is typically from 30,000, preferably from 40,000, more preferably from 50,000 and most preferably from 60,000 to 200,000, typically to 150,000, generally to 120,000, preferably to 100,000, more preferably to 90,000, and most preferably to 80,000. Number average molecular weight (Mn) as referred to throughout this application is determined using gel permeation chromatography (GPC). The molecular weight of the hydrogenated pentablock copolymer and properties obtained are dependent upon the molecular weight of each of the hydrogenated polymeric blocks. It has been discovered that by optimizing the molecular weight of the hydrogenated polymeric blocks, hydrogenated block copolymers of low molecular weight (30,000 to 200,000) can achieve high heat distortion temperatures and excellent toughness and tensile strength properties. Surprisingly, we have found that good physical properties can be obtained at relatively low hydrogenated block copolymer molecular weight which gives superior processability.

Typical number average molecular weight values for each hydrogenated vinyl aromatic polymer block are from 5,000, generally from 7,500, typically from 10,000, preferably from 12,000, more preferably from 13,000 and most preferably from 15,000 to 100,000, preferably to 90,000, more preferably to 80,000 and most preferably to 70,000. It should be noted that good properties are obtained at hydrogenated vinyl aromatic polymer molecular weights which are lower than the entanglement molecular weight of the hydrogenated vinyl aromatic polymer. It is generally accepted in the art that the number average molecular weight of a polymer must far exceed the entanglement molecular weight in order to achieve acceptable properties. The entanglement molecular weight of a polymer is associated with the chain length required for a given polymer to show a dramatic increase in melt viscosity due to chain entanglements. The entanglement molecular weights for many common polymers have been measured and reported in Macromolecules, 1994, Volume 27, page 4639. It is commonly observed for glassy polymers that maximum values of strength and toughness are achieved at about 10 times the entanglement molecular weight (see for instance Styrene Polymers in the Encyclopedia of Polymer Science and Engineering, 2nd edition, Volume 16, pages 62-71, 1989). The entanglement molecular weight is approximately 38,000 for polyvinylcyclohexane. We have determined that an optimum balance of properties and processability can be obtained at hydrogenated vinyl aromatic polymer block molecular weights (Mn) of 0.5 to 1.5 times the entanglement molecular weight of a hydrogenated vinyl aromatic polymer. In general, the optimum Mn for a hydrogenated polystyrene block in the hydrogenated block copolymer of the present invention is from 14,000 to 60,000.

The molecular weight of each hydrogenated conjugated diene polymer block is typically lower than that of the hydrogenated vinyl aromatic polymer block when a high modulus, rigid polymer is desired. When a low modulus elastomeric polymer is desired, the molecular weight of the hydrogenated diene polymer block can be higher than the hydrogenated vinyl aromatic polymer block. The molecular weight of each hydrogenated diene polymer block is typically from 2,000, preferably from 3,000, more preferably from 4,000 and most preferably from 5,000 to 50,000, preferably to 40,000, more preferably to 35,000 and most preferably to 30,000.

It is important to note that each individual block of the hydrogenated pentablock copolymer can have its own distinct Mn. In other words, for example, the hydrogenated vinyl aromatic polymer blocks within the hydrogenated pentablock copolymer of the present invention may each have a different Mn.

Methods of making block copolymers are well known in the art. Typically, block copolymers are made by anionic polymerization, examples of which are cited in Anionic Polymerization: Principles and Practical Applications, H.L. Hsieh and R.P. Quirk, Marcel Dekker, New York, 1996. In one embodiment, block copolymers are made by sequential monomer addition to a carbanionic initiator such as *sec*-butyl lithium or *n*-butyl lithium. In another embodiment, the pentablock copolymer is made by coupling a triblock material with a divalent coupling agent such as 1,2-dibromoethane, dichlorodimethylsilane, or phenylbenzoate. In this embodiment, a small chain (less than 10 monomer repeat units) of a conjugated diene polymer can be reacted with the vinyl aromatic polymer coupling end to facilitate the coupling reaction. Vinyl aromatic polymer blocks are typically difficult to couple, therefore, this technique is commonly used to achieve coupling of the vinyl aromatic polymer ends. The small chain of diene polymer does not constitute a distinct block since no microphase separation is achieved. The coupled structure achieved by this method is considered to be the functional equivalent of the ABABA pentablock copolymer structure. Coupling reagents and strategies which have been demonstrated for a variety of anionic polymerizations are discussed in Hsieh and Quirk, Chapter 12, pgs. 307-331. In another embodiment, a difunctional anionic initiator is used to initiate the polymerization from the center of the block system, wherein subsequent monomer additions add equally to both ends of the growing polymer chain. An example of such a difunctional initiator is 1,3-bis(1-phenylethenyl) benzene treated with organolithium compounds, as described in US-A-4,200,718 and US-A-4,196,154.

After preparation of the pentablock copolymer, the copolymer is hydrogenated to remove sites of unsaturation in both the conjugated diene polymer block and the vinyl aromatic polymer block segments of the copolymer. Any method of hydrogenation can be used and such methods typically include the use of metal catalysts supported on an inorganic substrate, such as Pd on BaSO₄ (US-A-5,352,744) and Ni on kieselguhr (US-A-3,333,024). Additionally, soluble, homogeneous catalysts such those prepared from combinations of transition metal salts of 2-ethylhexanoic acid and alkyl lithiums can be used to fully saturate block copolymers, as described in *Die Makromolekulare Chemie*, volume 160, pp 291, 1972. The copolymer hydrogenation can also be achieved using hydrogen and a heterogeneous catalyst such as those described in US-A-5,352,744, US-A-5,612,422 and US-A-5,645,253. The catalysts described therein are heterogeneous catalysts consisting of a metal crystallite supported on a porous silica substrate. An example of a silica supported catalyst which is especially useful in the polymer hydrogenation is a silica which has a surface area of at least 10 m²/g which is synthesized such that it contains pores with diameters ranging between 3000 and 6000 angstroms. This silica is then impregnated with a metal capable of catalyzing hydrogenation of the polymer, such as nickel, cobalt, rhodium, ruthenium, palladium, platinum, other Group VIII metals, combinations or alloys thereof. Other heterogeneous catalysts can also be used, having a diameter in the range of from 500 to 3,000 angstroms.

Alternatively, the hydrogenation can be conducted in the presence of a mixed hydrogenation catalyst characterized in that it comprises a mixture of at least two components. The first component comprises any metal which will increase the rate of hydrogenation and includes nickel, cobalt, rhodium, ruthenium, palladium, platinum, other Group VIII metals, or combinations thereof. Preferably rhodium and/or platinum is used. However, platinum is known to be a poor hydrogenation catalyst for nitriles, therefore, platinum would not be preferred in the hydrogenation of nitrile copolymers. The second component used in the mixed hydrogenation catalyst comprises a promoter which inhibits deactivation of the Group VIII metal(s) upon exposure to polar materials, and is herein referred to as the deactivation resistant component. Such components preferably comprise rhenium, molybdenum, tungsten, tantalum or niobium or mixtures thereof.

The amount of the deactivation resistant component in the mixed catalyst is at least an amount which significantly inhibits the deactivation of the Group VIII metal component when exposed to polar impurities within a polymer composition, herein referred to as a deactivation inhibiting amount. Deactivation of the Group VIII metal is evidenced by a significant decrease in hydrogenation reaction rate. This is exemplified in comparisons of a mixed hydrogenation catalyst and a catalyst containing only a Group VIII metal component under identical conditions in the presence of a polar impurity, wherein the catalyst containing only a Group VIII metal component exhibits a hydrogenation reaction rate which is less than 75 percent of the rate achieved with the mixed hydrogenation catalyst.

Preferably, the amount of deactivation resistant component is such that the ratio of the Group VIII metal component to the deactivation resistant component is from 0.5:1 to 10:1, more preferably from 1:1 to 7:1, and most preferably from 1:1 to 5:1.

The mixed catalyst can consist of the components alone, but preferably the catalyst additionally comprises a support on which the components are deposited. In one embodiment, the metals are deposited on a support such as a silica, alumina or carbon. In a more specific embodiment, a silica support having a narrow pore size distribution and surface area greater than 10 meters squared per gram (m2/g) is used.

The pore size distribution, pore volume, and average pore diameter of the support can be obtained via mercury porosimetry following the proceedings of

### ASTM D-4284-83.

The pore size distribution is typically measured using mercury porosimetry. However, this method is only sufficient for measuring pores of greater than 60 angstroms. Therefore, an additional method must be used to measure pores less than 60 angstroms. One such method is nitrogen desorption according to ASTM D-4641-87 for pore diameters of less than about 600 angstroms. Therefore, narrow pore size distribution is defined as the requirement that at least 98 percent of the pore volume is defined by pores having pore diameters greater than 300 angstroms and that the pore volume measured by nitrogen desorption for pores less than 300 angstroms, be less than 2 percent of the total pore volume measured by mercury porosimetry.

The surface area can be measured according to ASTM D-3663-84. The surface area is typically between 10 and 100 m2/g, preferably between 15 and 90 with most preferably between 50 and 85 m2/g.

The desired average pore diameter of the support for the mixed catalyst is dependent upon the polymer which is to be hydrogenated and its molecular weight (Mn). It is preferable to use supports having higher average pore diameters for the hydrogenation of polymers having higher molecular weights to obtain the desired amount of hydrogenation. For high molecular weight polymers (Mn>200,000 for example), the typical desired surface area can vary from 15 to 25 m2/g and the desired average pore diameter from 3,000 to 4000 angstroms. For lower molecular weight polymers (Mn<100,000 for example), the typical desired surface area can vary from 45 to 85 m2/g and the desired average pore diameter from 300 to 700 angstroms.

Silica supports are preferred and can be made by combining potassium silicate in water with a gelation agent, such as formamide, polymerizing and leaching as exemplified in U.S. Patent No. 4,112,032. The silica is then hydrothermally calcined as in Iler, R.K., The Chemistry of Silica, John Wiley and Sons, 1979, pp. 539-544, which generally consists of heating the silica while passing a gas saturated with water over the silica for about 2 hours or more at temperatures from 600°C to 850°C. Hydrothermal calcining results in a narrowing of the pore diameter distribution as well as increasing the average pore diameter. Alternatively, the support can be prepared by processes disclosed in Iler, R.K., The Chemistry of Silica, John Wiley and Sons, 1979, pp. 510-581.

A silica supported catalyst can be made using the process described in U.S. Patent No. 5,110,779, which is incorporated herein by reference. An appropriate metal, metal component, metal containing compound or mixtures thereof, can be deposited on the support by vapor phase deposition, aqueous or nonaqueous impregnation followed by calcination, sublimation or any other conventional method, such as those exemplified in Studies in Surface Science and Catalysis, "Successful Design of Catalysts" V. 44, pg. 146-158, 1989 and Applied Heterogeneous Catalysis pgs. 75-123, Institute Français du Pétrole Publications, 1987. In methods of impregnation, the appropriate metal containing compound can be any compound containing a metal, as previously described, which will produce a usable hydrogenation catalyst which is resistant to deactivation. These compounds can be salts, coordination complexes, organometallic compounds or covalent complexes.

Typically, the total metal content of the mixed supported catalyst is from 0.1 to 10 wt. percent based on the total weight of the silica supported catalyst. Preferable amounts are from 2 to 8 wt. percent, more preferably 0.5 to 5 wt. percent based on total catalyst weight.

Promoters, such as alkali, alkali earth or lanthanide containing compounds, can also be used to aid in the dispersion of the metal component onto the silica support or stabilization during the reaction, though their use is not preferred.

The amount of mixed supported catalyst used in the hydrogenation process is much smaller than the amount required in conventional unsaturated polymer hydrogenation reactions due to the high reactivity of the hydrogenation catalysts. Generally, amounts of less than 1 gram of supported catalyst per gram of unsaturated polymer are used, with less than 0.1 gram being preferred and less than 0.05 being more preferred. The amount of supported catalyst used is dependent upon the type of process, whether it is continuous, semi-continuous or batch, and the process conditions, such as temperature, pressure and reaction time wherein typical reaction times may vary from 5 minutes to 5 hours. Continuous operations can typically contain 1 part by weight supported catalyst to 200,000 or more parts unsaturated polymer, since the supported catalyst is reused many times during the course of continuous operation. Typical batch processes can use 1 part by weight supported catalyst to 5,000 parts unsaturated polymer. Higher temperatures and pressures will also enable using smaller amounts of supported catalyst.

The hydrogenation reaction can be conducted in the absence of a solvent but is preferably conducted in a hydrocarbon solvent in which the polymer is soluble and which will not hinder the hydrogenation reaction. Preferably the solvent is a saturated solvent such as cyclohexane, methylcyclohexane, ethylcyclohexane, cyclooctane, cycloheptane, dodecane, dioxane, diethylene glycol dimethyl ether, tetrahydrofuran, isopentane, decahydronaphthalene or mixtures thereof, with cyclohexane being the most preferred.

Typical hydrogenation temperatures are from 40°C preferably from 100°C, more preferably from 110°C, and most preferably from 120°C to 250°C, preferably to 200°C, more preferably to 180°C, and most preferably to 170°C.

The pressure of the hydrogenation reaction is not critical, though hydrogenation rates increase with increasing pressure. Typical pressures range from atmospheric pressure to 70 MPa, with 0.7 to 10.3 MPa being preferred.

The reaction vessel is purged with an inert gas to remove oxygen from the reaction area. Inert gases include but are not limited to nitrogen, helium, and argon, with nitrogen being preferred.

The hydrogenating agent can be any hydrogen producing compound which will efficiently hydrogenate the unsaturated polymer. Hydrogenating agents include but are not limited to hydrogen gas, hydrazine and sodium borohydride. In a preferred embodiment, the hydrogenating agent is hydrogen gas.

The level of hydrogenation of the pentablock copolymer of the present invention is preferably greater than 95 percent of the conjugated diene polymer block and greater than 90 percent of the vinyl aromatic polymer block segments, more preferably greater than 99 percent of the conjugated diene polymer block and greater than 95 percent of the vinyl aromatic polymer block segments, even more preferably greater than 99.5 percent of the conjugated diene polymer block and greater than 98 percent of the vinyl aromatic polymer block segments, and most preferably greater than 99.9 percent of the conjugated diene polymer block and 99.5 percent of the vinyl aromatic polymer block segments. The term 'level of hydrogenation' refers to the percentage of the original unsaturated bonds which become saturated upon hydrogenation. The level of hydrogenation in hydrogenated vinyl aromatic polymers is determined using UV-VIS spectrophotometry, while the level of hydrogenation in hydrogenated diene polymers is determined using proton NMR.

The hydrogenated pentablock copolymers of the present invention may be rigid, flexible or elastomeric, depending on the relative volumes of hydrogenated conjugated diene polymer and hydrogenated vinyl aromatic polymer block components. The hydrogenated pentablock copolymers are typically rigid when the ratio of hydrogenated conjugated diene to hydrogenated vinyl aromatic is in the range of approximately 0.50 or less. Elastomeric pentablock copolymers result when the ratio of hydrogenated conjugated diene to hydrogenated vinyl aromatic is in the range of approximately1.5 and higher. Flexible pentablock copolymers generally have ratios somewhere between the two.

Anionically polymerized pentablock copolymers typically microphase separate into well-defined morphologies, with morphology dimensions typically ranging from 5 to 50 nanometers in size. Typical morphologies include a continuous matrix phase of one hydrogenated polymer with well-defined spheres, cylinders or gyroids of the minor phase hydrogenated polymer dispersed within the matrix, and a cocontinuous phase, wherein both hydrogenated polymers are in a continuous phase interspersed within each other. These different morphologies give rise to different physical properties. Hydrogenated pentablock copolymers in which the hydrogenated conjugated diene polymer blocks are continuous are typically elastomeric, highly resilient materials. Conversely, materials in which the hydrogenated vinyl aromatic polymer block segments are the continuous phase are typically stiff, tough plastics. Hydrogenated pentablock copolymers wherein both hydrogenated polymers are cocontinuous tend to have intermediate properties.

Surprisingly, it has been found that the hydrogenated pentablock copolymers of the present invention have significantly improved properties when compared to hydrogenated triblock copolymers of similar molecular weights.

The following examples are provided to illustrate the present invention. The examples are not intended to limit the scope of the present invention and they should not be so interpreted. Amounts are in weight parts or weight percentages unless otherwise indicated.

### Example 1

### la) Block Copolymers Produced by Sequential Polymerization

A mixture of 386 Kg of cyclohexane containing approximately 8 to 15 weight percent isopentane is added to a 1136 liter stirred reactor under nitrogen atmosphere. The reactor is blanked by adding 0.5 Kg of a cyclohexane solution which is 0.0979 molar in low molecular weight polystyryl lithium. To this mixture is added 517 g of a 1.4M solution of sec-butyllithium in cyclohexane. The solution is heated to approximately 65°C and 21.1 Kg of styrene monomer is added, followed by a 34 Kg hydrocarbon solvent purge of the styrene line. After 20 minutes of polymerization, 13.6 Kg of butadiene monomer is added at a temperature of about 70°C, followed by 34 Kg of hydrocarbon solvent which is followed immediately by another styrene addition of 21.1 Kg. After another 20 minutes, a second addition of 13.6 Kg of butadiene is made at about 70°C, followed by a 34 Kg line flush with solvent. After another 20 minutes, the third addition of 21.1 Kg of styrene is made and the polymerization continues for a final 20 minutes. At this point 70 grams of 2-propanol is added to terminate the reaction. Analysis by size exclusion chromatography shows a main peak with a number average molecular weight of 132,000 on a polystyrene calibration basis.

### lb) Block copolymers produced by Chain Coupling

10.8 g of purified styrene monomer is initiated with a 0.00166 M solution of *sec*-butyllithium and polymerized in 500 mL cyclohexane at 40°C under an argon atmosphere. After 4 hours, 20 g of purified 1,3-butadiene monomer is added directly to the reactor and polymerization is continued for approximately 12 hours at 40°C. The reaction mixture is then cooled to 8°C , where it is maintained for all subsequent steps. Tetrahydrofuran is added in a ratio of approximately 50:1 (THF : living anion). 10.8 g purified styrene monomer is then added dropwise to the reaction mixture, and the color quickly turns orange. For the purpose of capping polystyrenyllithium anion, a solution of butadiene monomer pre-dissolved in THF is added dropwise until the color turns light green. Based on the mass of butadiene/THF solution added, the polybutadiene capping sequence is 4-6 repeat units long. The coupling agent, α,α'-dichloro-*p*-xylene/THF solution, is introduced dropwise. The end point is indicated by the disappearance of the light green color characteristic of poly(1,2-butadienyl)lithium anions. The resulting SBSBS pentablock copolymer precursor is recovered by precipitating in methanol.

The compositions of these block copolymers are given in Table 1. Two triblocks (SBS) are made by sequential polymerization for comparison, and three pentablocks (SBSBS) are prepared using the coupling synthetic methodology. These block copolymers are then hydrogenated such that all of the polybutadiene blocks and polystyrene blocks are completely saturated.

### II) Hydrogenation

Approximately 20 grams of dried block copolymer is dissolved in 700 mL cyclohexane. This polymer is hydrogenated using a Pt on SiO₂ hydrogenation catalyst as described in US-A-5,612,422. The polymer to catalyst ratio is 10 to 1. The hydrogenation reaction is conducted in a PPI (Precision Pressure Industry) reactor for 12 hours at 177°C under 3447 MPa hydrogen.

Table 2 shows a series of physical properties for the hydrogenated block copolymers described above. Mechanical properties were obtained using compression molded samples. Tensile properties were measured according to ASTM D638 using type 5 microtensile specimens at a crosshead speed of 0.127cm/min and a 101.9 Kg load cell. Notched izod impact strength was determined according to ASTM D-256, and unnotched izod impact strength was determined according to ASTM method D 4812.

**Table 1.**

| Block Copolymer Compositions Prior to Hydrogenation | | | | | |
|---|---|---|---|---|---|
| Block Copolymer | Polymerization Method | % PS | % 1,2-butadiene | Mn | Mw/Mn |
| I) SBS-1 | Sequential | 71 | 11.2 | 104,000 | 1.01 |
| II) SBSBS-1 | Sequential | 70 | 10.2 | 102,000 | 1.003 |
| III) SBS-2 | Sequential | 55 | -- | 75,000 | -- |
| IV) SBS-3 | Sequential | 69 | -- | 74,600 | -- |
| V) SBSBS-2 | Coupled | 49 | -- | 56,000 | 1.05 |
| VI) SBSBS-3 | Coupled | 70 | -- | 68,000 | 1.06 |
| VII) SBSBS-4 | Coupled | 84 | -- | 84,000 | 1.04 |
| PS=polystyrene | | | | | |
| Mn=number average molecular weight | | | | | |
| Mw=weight average molecular weight | | | | | |
| S= polystyrene block | | | | | |
| B= polybutadiene block | | | | | |

**Table 2.**

| Mechanical Properties of Hydrogenated Block Copolymers Hydrogenated versions of materials in Table 1 | | | | | | | |
|---|---|---|---|---|---|---|---|
| Block Copolymer | Tens. Yield Stress (MPa) | % Strain at Yield | Tensile Stress (MPa) | % Elong. At Break | Notched Izod, 73°C (J/m) | Unnotched Izod, 73°C (J/m) | Tensile Mod. (GPa) |
| I) VEV-1^{a*} | 26.5 | 1.6 | 25.0 | 8.2 | 58.7 | 315 | 2.0 |
| II) VEVEV-1^{a} | 34.7 | 3 | 36.1 | 31 | 74.7 | 566 | 1.6 |
| II) VEVEV-1^{b} | 44.26 | 5.6 | 12.4 | 67 | 283 | 544 | 1.7 |
| III) VEV-2*^{c} | 32.1 | 9.9 | 24.0 | 466 | -- | -- | -- |
| IV) VEV-3*^{c} | -- | -- | 28.7 | 4.7 | -- | -- | -- |
| V) VEVEV-2^{c} | 26.2 | 14.8 | 35.2 | >745 | -- | -- | 0.93 |
| VI) VEVEV-3^{c} | 29.5 | 4.7 | 35.8 | 70.8 | -- | -- | 2.0 |
| VII) VEVEV-4^{c} | -- | -- | 37.1 | 5.7 | -- | -- | 2.4 |

| | | | | | | | |
|---|---|---|---|---|---|---|---|
| a) Compression molded at 240°C. | | | | | | | |
| b) Compression molded at 163°C. | | | | | | | |
| c) Compression molded at 220°C. V= hydrogenated polystyrene block E= hydrogenated polybutadiene block | | | | | | | |
| *Comparative examples | | | | | | | |

The hydrogenated pentablock copolymers have substantially better practical toughness, higher tensile yield values, and higher elongation at break than triblock materials with equivalent compositions and molecular weights.

## Claims

1. A hydrogenated pentablock copolymer having the structure ABABA, wherein block (A) is a hydrogenated vinyl aromatic polymer block having a hydrogenation level of greater than 90 percent and block (B) is a hydrogenated conjugated diene polymer block having a hydrogenation level of greater than 95 percent, **characterized by**:
a) a total number average molecular weight (Mnₜ) of from 30,000 to 200,000, wherein each hydrogenated vinyl aromatic polymer block (A) has a Mnₐ of from 5,000 to 100,000 and each hydrogenated conjugated diene polymer block (B) has a Mn_{b} of from 2,000 to 50,000.

2. The hydrogenated pentablock copolymer of Claim 1, wherein the hydrogenated vinyl aromatic polymer is hydrogenated polystyrene.

3. The hydrogenated pentablock copolymer of Claim 1, wherein the hydrogenated conjugated diene polymer is a hydrogenated polybutadiene.

4. The hydrogenated pentablock copolymer of Claim 3, wherein the hydrogenated polybutadiene is obtained from the hydrogenation of a polybutadiene having at least 40 weight percent 1,2-butadiene content, based on the weight of the polybutadiene block.

5. The hydrogenated pentablock copolymer of Claim 3, wherein the hydrogenated polybutadiene is obtained from the hydrogenation of a polybutadiene having less than 40 weight percent 1,2-butadiene content, based on the weight of the polybutadiene block.

6. The hydrogenated pentablock copolymer of Claim 1, wherein the hydrogenated conjugated diene polymer is hydrogenated polyisoprene.

7. The hydrogenated pentablock copolymer of Claim 1, comprising from 10 to 90 weight percent hydrogenated vinyl aromatic polymer, based on the total weight of the hydrogenated pentablock copolymer.

8. The hydrogenated pentablock copolymer of Claim 1, comprising from 15 to 85 weight percent hydrogenated vinyl aromatic polymer, based on the total weight of the hydrogenated pentablock copolymer.

9. The hydrogenated pentablock copolymer of Claim 1, comprising at least 65 weight percent hydrogenated vinyl aromatic polymer, based on the total weight of the hydrogenated pentablock copolymer.

10. The hydrogenated pentablock copolymer of Claim 1, comprising from 10 to 90 weight percent hydrogenated conjugated diene polymer, based on the total weight of the hydrogenated pentablock copolymer.

11. The hydrogenated pentablock copolymer of Claim 1, comprising from 15 to 85 weight percent hydrogenated conjugated diene polymer, based on the total weight of the hydrogenated pentablock copolymer.

12. The hydrogenated pentablock copolymer of Claim 1, comprising at least 60 weight percent hydrogenated conjugated diene polymer, based on the total weight of the hydrogenated pentablock copolymer

13. The hydrogenated pentablock copolymer of Claim 1, wherein the hydrogenated vinyl aromatic polymer has a hydrogenation level of greater than 98 percent.

14. The hydrogenated pentablock copolymer of Claim 1, wherein the hydrogenated vinyl aromatic polymer has a hydrogenation level of greater than 99.5 percent.

15. The hydrogenated pentablock copolymer of Claim 1, wherein each hydrogenated vinyl aromatic polymer block has a Mnₐ of from 10,000 to 65,000.

16. The hydrogenated pentablock copolymer of Claim 1, wherein each hydrogenated conjugated diene polymer block has a Mn_{b} of from 5,000 to 30,000.

17. The hydrogenated block copolymer of Claim 1, having a total Mnₜ of from 40,000 to 100,000.

18. The hydrogenated block copolymer of Claim 1, having a total Mn, of from 50,000 to 90,000.

## Patentansprüche

1. Hydriertes Pentablockcopolymer mit der Struktur ABABA, worin Block (A) ein Block aus einem hydrierten aromatischen Vinylpolymer mit einem Hydrierungsgrad von größer als 90% ist und Block (B) ein Block aus einem hydrierten Polymer von konjugiertem Dien mit einem Hydrierungsgrad von größer als 95% ist, **gekennzeichnet durch**:
a) ein gesamtes zahlenmittleres Molekulargewicht (Mnₜ) von 30.000 bis 200.000, wobei jeder Block aus hydriertem aromatischen Vinylpolymer (A) ein Mnₐ von 5.000 bis 100.000 hat und jeder Block aus hydriertem Polymer von konjugiertem Dien (B) ein Mn_{b} von 2.000 bis 50.000 hat.

2. Hydriertes Pentablockcopolymer nach Anspruch 1, wobei das hydrierte aromatische Vinylpolymer hydriertes Polystyrol ist.

3. Hydriertes Pentablockcopolymer nach Anspruch 1, wobei das hydrierte Polymer von konjugiertem Dien hydriertes Polybutadien ist.

4. Hydriertes Pentablockcopolymer nach Anspruch 3, wobei das hydrierte Polybutadien aus der Hydrierung eines Polybutadiens mit einem Gehalt von mindestens 40 Gew.-% 1,2-Butadien, bezogen auf das Gewicht des Polybutadienblocks, erhalten wird.

5. Hydriertes Pentablockcopolymer nach Anspruch 3, wobei das hydrierte Polybutadien aus der Hydrierung eines Polybutadiens mit einem Gehalt von weniger als 40 Gew.-% 1,2-Butadien, bezogen auf das Gewicht des Polybutadienblocks, erhalten wird.

6. Hydriertes Pentablockcopolymer nach Anspruch 1, wobei das hydrierte Polymer von konjugiertem Dien hydriertes Polyisopren ist.

7. Hydriertes Pentablockcopolymer nach Anspruch 1, das 10 bis 90 Gew.-% hydriertes aromatisches Vinylpolymer, bezogen auf das Gesamtgewicht des hydrierten Pentablockcopolymers, enthält.

8. Hydriertes Pentablockcopolymer nach Anspruch 1, das 15 bis 85 Gew.-% hydriertes aromatisches Vinylpolymer, bezogen auf das Gesamtgewicht des hydrierten Pentablockcopolymers, enthält.

9. Hydriertes Pentablockcopolymer nach Anspruch 1, das mindestens 65 Gew.-% hydriertes aromatisches Vinylpolymer, bezogen auf das Gesamtgewicht des hydrierten Pentablockcopolymers, enthält.

10. Hydriertes Pentablockcopolymer nach Anspruch 1, das 10 bis 90 Gew.-% hydriertes Polymer von konjugiertem Dien, bezogen auf das Gesamtgewicht des hydrierten Pentablockcopolymers, enthält.

11. Hydriertes Pentablockcopolymer nach Anspruch 1, das 15 bis 85 Gew.-% hydriertes Polymer von konjugiertem Dien, bezogen auf das Gesamtgewicht des hydrierten Pentablockcopolymers, enthält.

12. Hydriertes Pentablockcopolymer nach Anspruch 1, das mindestens 60 Gew.-% hydriertes Polymer von konjugiertem Dien, bezogen auf das Gesamtgewicht des hydrierten Pentablockcopolymers, enthält.

13. Hydriertes Pentablockcopolymer nach Anspruch 1, wobei das hydrierte aromatische Vinylpolymer einen Hydrierungsgrad von größer als 98% hat.

14. Hydriertes Pentablockcopolymer nach Anspruch 1, wobei das hydrierte aromatische Vinylpolymer einen Hydrierungsgrad von größer als 99,5% hat.

15. Hydriertes Pentablockcopolymer nach Anspruch 1, wobei jeder Block von hydriertem aromatischen Vinylpolymer ein Mnₐ von 10.000 bis 65.000 hat.

16. Hydriertes Pentablockcopolymer nach Anspruch 1, wobei jeder Block aus hydriertem Polymer von konjugiertem Dien ein Mn_{b} von 5.000 bis 30.000 hat.

17. Hydriertes Blockcopolymer nach Anspruch 1, das ein Gesamt-Mnₜ von 40.000 bis 100.000 hat.

18. Hydriertes Blockcopolymer nach Anspruch 1, das ein Gesamt-Mnₜ von 50.000 bis 90.000 hat.

## Revendications

1. Copolymère à cinq blocs hydrogéné ayant la structure ABABA, dans lequel le bloc (A) est un bloc polymère aromatique vinylique hydrogéné ayant un niveau d'hydrogénation supérieur à 90 pour cent et le bloc (B) est un bloc polymère diène conjugué hydrogéné ayant un niveau d'hydrogénation supérieur à 95 pour cent, **caractérisé par** :
a) une masse moléculaire moyenne en nombre totale (Mnₜ) de 30 000 à 200 000, dans lequel chaque bloc polymère aromatique vinylique hydrogéné (A) possède une Mnₐ de 5000 à 100 000, et chaque bloc polymère diène conjugué hydrogéné (B) possède une Mn_{b} de 2000 à 50 000.

2. Copolymère à cinq blocs hydrogéné selon la revendication 1, dans lequel le polymère aromatique vinylique hydrogéné est du polystyrène hydrogéné.

3. Copolymère à cinq blocs hydrogéné selon la revendication 1, dans lequel le polymère diène conjugué hydrogéné est un polybutadiène hydrogéné.

4. Copolymère à cinq blocs hydrogéné selon la revendication 3, dans lequel le polybutadiène hydrogéné est obtenu à partir de l'hydrogénation d'un polybutadiène ayant une teneur en 1,2-butadiène d'au moins 40 pour cent en poids, sur la base du poids du bloc polybutadiène.

5. Copolymère à cinq blocs hydrogéné selon la revendication 3, dans lequel le polybutadiène hydrogéné est obtenu à partir de l'hydrogénation d'un polybutadiène ayant une teneur en 1,2-butadiène inférieure à 40 pour cent en poids, sur la base du poids du bloc polybutadiène.

6. Copolymère à cinq blocs hydrogéné selon la revendication 1, dans lequel le polymère diène conjugué hydrogéné est du polyisoprène hydrogéné.

7. Copolymère à cinq blocs hydrogéné selon la revendication 1, comprenant de 10 à 90 pour cent en poids de polymère aromatique vinylique hydrogéné sur la base du poids total du copolymère à cinq blocs hydrogéné.

8. Copolymère à cinq blocs hydrogéné selon la revendication 1, comprenant de 15 à 85 pour cent en poids de polymère aromatique vinylique hydrogéné sur la base du poids total du copolymère à cinq blocs hydrogéné.

9. Copolymère à cinq blocs hydrogéné selon la revendication 1, comprenant au moins 65 pour cent en poids de polymère aromatique vinylique hydrogéné sur la base du poids total du copolymère à cinq blocs hydrogéné.

10. Copolymère à cinq blocs hydrogéné selon la revendication 1, comprenant de 10 à 90 pour cent en poids de polymère diène conjugué hydrogéné sur la base du poids total du copolymère à cinq blocs hydrogéné.

11. Copolymère à cinq blocs hydrogéné selon la revendication 1, comprenant de 15 à 85 pour cent en poids de polymère diène conjugué hydrogéné sur la base du poids total du copolymère à cinq blocs hydrogéné.

12. Copolymère à cinq blocs hydrogéné selon la revendication 1, comprenant au moins 60 pour cent en poids de polymère diène conjugué hydrogéné sur la base du poids total du copolymère à cinq blocs hydrogéné.

13. Copolymère à cinq blocs hydrogéné selon la revendication 1, dans lequel le polymère aromatique vinylique hydrogéné possède un niveau d'hydrogénation supérieur à 98 pour cent.

14. Copolymère à cinq blocs hydrogéné selon la revendication 1, dans lequel le polymère aromatique vinylique hydrogéné possède un niveau d'hydrogénation supérieur à 99,5 pour cent.

15. Copolymère à cinq blocs hydrogéné selon la revendication 1, dans lequel chaque bloc polymère aromatique vinylique hydrogéné possède une Mnₐ de 10 000 à 65 000.

16. Copolymère à cinq blocs hydrogéné selon la revendication 1, dans lequel chaque bloc polymère diène conjugué hydrogéné possède une Mn_{b} de 5000 à 30 000.

17. Copolymère séquencé hydrogéné selon la revendication 1, possédant une Mnₜ totale de 40 000 à 100 000.

18. Copolymère séquencé hydrogéné selon la revendication 1, possédant une Mnₜ totale de 50 000 à 90 000.
